(19) Europäisches Patentamt

European Patent Office

Office européen des brevets

(11) Veröffentlichungsnummer: **0 253 006**
**B1**

(12) **EUROPÄISCHE PATENTSCHRIFT**

(45) Veröffentlichungstag der Patentschrift:
**31.05.89**

(51) Int. Cl.⁴: **D21D 5/06**

(21) Anmeldenummer: **86109682.4**

(22) Anmeldetag: **15.07.86**

(54) **Drucksortierer.**

(43) Veröffentlichungstag der Anmeldung:
**20.01.88 Patentblatt 88/3**

(45) Bekanntmachung des Hinweises auf die Patenterteilung:
**31.05.89 Patentblatt 89/22**

(84) Benannte Vertragsstaaten:
**AT DE FR GB IT SE**

(56) Entgegenhaltungen:
**CH-A- 564 638**
**DE-A- 2 750 499**
**DE-B- 1 131 081**
**DE-B- 2 924 794**
**GB-A- 1 053 583**
**US-A- 3 448 858**

(73) Patentinhaber: **Hermann Finckh Maschinenfabrik GmbH & Co., Marktstrasse 185, D-7417 Pfullingen(DE)**

(72) Erfinder: **Holz, Emil, Metzinger Strasse 51, D-7412 Eningen(DE)**

(74) Vertreter: **Hoeger, Stellrecht & Partner, Uhlandstrasse 14 c, D-7000 Stuttgart 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft einen Drucksortierer mit einem Gehäuse, in dem ein eine Siebwand aufweisendes Sieb um eine aufrechtstehende Drehachse drehbar gelagert ist, dessen Siebwand eine zur Drehachse rotationssymmetrische Gestalt aufweist und innerhalb des Gehäuses einen ersten Raum für eine zu sortierende Suspension von einem zweiten Raum für den von der Siebwand durchgelassenen Gutstoff trennt, wobei diese beiden Räume bezüglich der Drehachse konzentrisch zueinander angeordnet sind, sowie mit im ersten Raum stationär angeordneten ersten Reinigungsflügeln, die in geringem Abstand von der Siebwand deren Kontur folgen, und mit einem Gehäuseeinlass für die zu sortierende Suspension, einem ersten Gehäuseauslass für den Gutstoff und einem zweiten Gehäuseauslass für den von der Siebwand nicht durchgelassenen Spuckstoff.

Ein derartiger Drucksortierer ist aus der DE-C 1 946 948 bekannt.

Weit verbreitet sind Drucksortierer, bei denen ein kreiszylindrischer Siebkorb aufrechtstehend in einem Drucksortierergehäuse stationär montiert ist und mit einem Rotor zusammenwirkt, der im Drucksortierergehäuse um die Siebkorbachse drehbar gelagert ist, über eine Riemenscheibe oder direkt durch einen Elektromotor angetrieben werden kann und mit Reinigungsflügeln versehen ist, die auf der Innen- oder auf der Aussenseite oder sowohl auf der Innen- als auch auf der Aussenseite des Siebkorbs (DE-A 2 750 499) umlaufen.

Diese bekannten Drucksortierer benötigen jedoch eine verhältnismässig grosse Antriebsleistung für den Rotorantrieb.

Zum Stand der Technik gehören aber auch Drucksortierer der eingangs erwähnten Art, d.h. Drucksortierer mit rotierendem Sieb und stationären Reinigungsflügeln. Diese benötigen weniger Antriebsleistung, weil bei ihnen das in Umlauf gesetzte Flüssigkeitsvolumen geringer ist als bei Drucksortierern mit rotierenden Reinigungsflügeln; gleichfalls positiv wirkt sich aus, daß sich die rotationssymmetrisch gestalteten Siebe der Drucksortierer mit hoher Rundlaufgenauigkeit herstellen und lagern lassen, so daß auch aus diesem Grund weniger Antriebsleistung benötigt wird als für die bekannten Drucksortierer mit stationärem Siebkorb und rotierenden Reinigungsflügeln.

Bekannte Drucksortierer der eingangs erwähnten Art für die Aufbereitung von Fasersuspensionen im Zuge der Papier- oder Kartonherstellung, mit deren Verbesserung sich die vorliegende Erfindung beschäftigt, besitzen nun entweder auf der Abström- bzw. Auslaßseite oder auf der Anström- bzw. Einlaßseite des Siebs einen Satz stationärer Reinigungsflügel.

Ein bekannter Drucksortierer der ersten Art wird von der Firma A.B. Karlstads Mekaniska Werkstad, 65115 Karlstad, Schweden, unter der Bezeichnung UNI-SCREEN 100 auf den Markt gebracht. Bei diesem bekannten Drucksortierer erstreckt sich eine vertikale Rotorwelle durch das ganze Drucksortierergehäuse hindurch; unten ist auf die Rotorwelle eine deren Antrieb dienende Riemenscheibe aufgekeilt, oben ist auf der Rotorwelle eine Art Glocke befestigt, welche einen sich nach unten zu leicht konisch erweiternden Siebkorb trägt, und zwischen dieser Glocke und der Riemenscheibe ist die Rotorwelle im Drucksortierergehäuse drehbar gelagert. Das letztere besitzt in seinem oberen Bereich einen Einlass für die zu sortierende Fasersuspension, die den Siebkorb von aussen nach innen durchströmen soll, der Innenseite des Siebkorbs unmittelbar benachbart ist ein Satz stationärer Reinigungsflügel angeordnet, auf der Aussenseite des Siebkorbs befindet sich unter diesem ein Spuckstoffauslass, und der Innenraum des Siebkorbs steht mit einem im unteren Bereich des Drucksortierergehäuses vorgesehenen Gutstoffauslass in Verbindung.

Bei dem bekannten, dem Oberbegriff des Anspruchs 1 zugrundegelegten Drucksortierer gemäß der DE-C 1 946 948 durchströmt die zu sortierende Fasersuspension zunächst einen oberen Bereich des rotierenden Siebkorbs, welcher mit verhältnismässig groben Sieböffnungen versehen ist, um grobe Verunreinigungen abzuhalten, von aussen nach innen, worauf die unteren zwei Drittel des rotierenden Siebkorbs, welche feinere Sieböffnungen aufweisen, von innen nach aussen durchströmt werden. Der Innenseite des Siebkorbs benachbart sind feststehende Reinigungsflügel angeordnet, der sog. Gutstoff fliesst über einen den Siebkorb umgebenden und mit einem Auslaßstutzen versehenen Ringraum des Drucksortierergehäuses ab, während für den Spuckstoff im unteren Bereich des Drucksortierergehäuses ein Auslaßstutzen vorgesehen ist, der in eine unterhalb des Siebkorbs vom Gehäuse gebildete Rinne mündet.

Der Erfindung lag die Aufgabe zugrunde, die bekannten Drucksortierer mit rotierendem Sieb und auf der einen Siebseite angeordneten stationären Reinigungsflügeln so zu verbessern, daß sich im Betrieb weniger Störungen ergeben. Dabei wurde von der folgenden, insgesamt neuen Erkenntnis Gebrauch gemacht: Auf der Anström- bzw. Einlaßseite eines rotierenden Siebs angeordnete stationäre Reinigungsflügel verhindern, daß die zu reinigende Fasersuspension im Bereich der Sieboberfläche ungebremst mit dem Sieb umläuft; sie bremsen als die zu reinigende Fasersuspension ab und führen zu einer verhältnismässig hohen Relativgeschwindigkeit zwischen dem rotierenden Sieb und der dem Sieb zufliessenden, zu reinigenden Fasersuspension. Dadurch wird die Abscheidung langfaseriger Verunreinigungen durch das Sieb erhöht, und die Sortierwirkung des Siebs wird durch Fraktionieren sowie dadurch verbessert, daß die hohe Relativgeschwindigkeit zu einem günstigeren Anströmwinkel der Fasersuspension an der Anströmseite des Siebs führt. Die an der Abström- bzw. Auslaßseite des Siebs befindlichen Reinigungsflügel bewirken in Verbindung mit den auf der Anströmseite des Siebs vorgesehenen Reinigungsflügeln, daß sich auf der Abström- bzw. Auslaßseite des Siebs keine Fasergespinste ergeben: Durch die Reinigungsflügel wird verhindert, daß sich an durch die Sieböffnungen in den Gutstoff hineinragenden Faserenden andere

Fasern anspinnen, d.h. anlagern (bei Fasersuspensionen, die im wesentlichen kurze Fasern enthalten, die nicht zum Verspinnen neigen, kann u.U. auf Reinigungsflügel an der Abström- bzw. Auslaßseite des Siebs verzichten werden). Ausgehend von diesen Erkenntnissen wird die gestellte Aufgabe erfindungsgemäss dadurch gelöst, daß ein Drucksortierer der eingangs erwähnten Art auch im zweiten Raum mit stationären zweiten Reinigungsflügeln versehen wird, die in geringem Abstand von der Siebwand deren Kontur folgen, und daß man das Sieb an einem seiner Enden bis auf einen axialen Kanal, der mit einem der Gehäuseauslässe verbunden ist und dessen Querschnitt einen Bruchteil des Siebquerschnitts beträgt, in axialer Richtung verschliesst. Bei erfindungsgemässen Drucksortierern, bei denen der erste Raum die Siebwand und den zweiten Raum umgibt und der axiale Kanal des Siebs mit dem Gutstoffauslass verbunden ist, pflanzen sich die in der Fasersuspension infolge der Reinigungsflügel entstehenden und zur Verhinderung eines Verstopfens der Sieböffnungen durchaus erwünschten Pulsationen (Druckschwankungen) infolge der Drosselwirkung des verhältnismässig engen axialen Kanals, durch den der Gutstoff abströmt, nicht ungedämpft bis zum Gutstoffauslass der Drucksortierers fort, so daß sie bei der Papierherstellung die Blattbildung im sog. Stoffauflauf weniger stören als dies bei den geschilderten bekannten Drucksortierern mit rotierendem Siebkorb und feststehenden Reinigungsflügeln der Fall ist. Umgibt hingegen bei einem erfindungsgemässen Drucksortierer der zweite Raum die Siebwand und den ersten Raum, d.h. wird das Sieb von innen nach aussen durchströmt, und ist der axiale Kanal des Siebs mit dem Spuckstoffauslass verbunden, so ergibt sich eine elegante Möglichkeit für das Abfliessen des Spuckstoffs, ohne daß ein ungehindertes Abströmen der Fasersuspension von der Anströmseite des Siebs zum Spuckstoffauslass zu grossen Verlusten an brauchbaren Fasern führen würde. Besonders einfach wird die zuletzt beschriebene Variante der erfindungsgemässen Konstruktion dann, wenn der axiale Kanal in einer mit dem Sieb fest verbundenen Antriebswelle angeordnet ist, deren Durchmesser es durchaus erlaubt, einen verhältnismässig engen Spuckstoffablaufkanal in der Antriebswelle unterzubringen.

Bei einer besonders vorteilhaften Ausführungsform des erfindungsgemässen Drucksortierers sind der Gehäuseeinlass sowie der Gutstoffauslass am Gehäuse oberhalb der Siebwand angeordnet; wie bereits erwähnt, entstehen im Betrieb des Drucksortierers an den Reinigungsflügeln Pulsationen (Druckschwankungen), die sich im Gutstoff, aber auch am Gehäuseeinlass störend auswirken. Wenn Gehäuseeinlass und Gutstoffauslass im Bereich (in radialer Richtung gesehen) der Reinigungsflügel liegen, ist die Gefahr, daß sich am sog. Stoffauflauf Druckschwankungen verhältnismässig grosser Amplitude ergeben, besonders gross. Deshalb empfiehlt sich das vorstehend aufgeführte Merkmal, nämlich den Gehäuseeinlass sowie den Gutstoffauslass oberhalb der Siebwand anzuordnen. Im selben Sinne wirkt sich vorteilhaft aus, wenn an einem Ende der Siebwand ein Halsstück befestigt ist, welches in einen zylindrischen Hals mit einem axialen Kanal ausläuft, und wenn zwischen dem freien Ende des Halses und einer Gehäusezwischenwand, welche eine dem Halskanal benachbarte Durchlassöffnung aufweist, eine Dichtung vorgesehen ist. In diesem Fall ergeben sich zwei Vorteile: Wird das Sieb von aussen nach innen durchströmt, so wirken nicht nur die Sieböffnungen, sondern auch der axiale Kanal des Halsstücks als Drosseln für die durch die Reinigungsflügel hervorgerufenen und in Richtung des Gutstoffauslasses laufenden Druckstösse. Gegenüber den eingangs geschilderten bekannten Drucksortierern, bei denen der Siebkorb an der Stelle seines grössten Durchmessers gegenüber dem Drucksortierergehäuse abgedichtet wird, erzielt man durch den erfindungsgemässen engen Kanal aber noch einen weiteren beträchtlichen Vorteil, indem nämlich das Sieb gegenüber dem Drucksortierergehäuse an einer Stelle abdichten lässt, deren Durchmesser wesentlich kleiner als der Durchmesser der Siebwand ist, so daß sich im Dichtungsbereich sehr viel kleinere Relativgeschwindigkeiten zwischen den gegeneinander bewegten Teilen und damit höhere Standzeiten für die Dichtung ergeben. Deshalb kann beim erfindungsgemässen Drucksortierer an dieser Stelle auch mit einer normalen Gleitringdichtung anstelle einer sog. Spaltdichtung gearbeitet werden, welch letzterer ständig Wasser zugeführt werden muss, um die gewünschte Abdichtung zu erhalten.

Eine besonders vorteilhafte Ausführungsform des erfindungsgemässen Drucksortierers lässt zwei Betriebsarten zu, nämlich einmal eine Durchströmung der Siebwand von aussen nach innen und zum anderen eine Betriebsart, bei der die zu sortierende Fasersuspension in das Siebinnere eingespeist wird. Diese Ausführungsform zeichnet sich dadurch aus, daß das Gehäuse, in Richtung der Drehachse des Siebs aufeinanderfolgend, eine Lagerung für die mit dem Sieb verbundene Antriebswelle, eine von letzterer durchsetzte erste Zwischenwand, einen Aufnahmeraum für das Sieb, eine zweite Zwischenwand und einen Strömungsraum aufweist, daß ferner das Gehäuse im Siebaufnahmeraum mit einer Tragvorrichtung für die auf der Aussenseite der Siebwand angeordneten Reinigungsflügel versehen ist, daß die zweite Zwischenwand eine zur Drehachse konzentrische und mit dem Siebinnern in Verbindung stehende Durchlassöffnung aufweist und daß im Bereich des Siebaufnahmeraums und des Strömungsraums am Gehäuse Anschlussöffnungen vorgesehen sind. Bei der einen Betriebsart wird dann die zu sortierende Fasersuspension in den Siebaufnahmeraum eingespeist und der Gutstoff über den axialen Kanal des Siebs und den erwähnten Strömungsraum abgezogen; für diese Betriebsart empfehlen sich die Anordnung der Antriebswellenlagerung unten und des Strömungsraums oben sowie eine mit einem Ventil versehene Entlüftungsöffnung in der den Strömungsraum nach oben begrenzenden Partie des Drucksortierergehäuses. Des weiteren ist es von Vorteil, wenn das Gehäuse im Bereich des Siebaufnahmeraums zwei den beiden Zwischenwänden benachbarte Anschlussöffnungen aufweist, von denen die eine verschliessbar ist und im geöffneten Zustand den Spuckstoffauslass bildet. Für die andere Betriebsart wird dieser Spuckstoffauslass dann verschlossen und der Spuckstoff über den erwähnten, in der Antriebswelle angeordneten axialen Kanal abgezogen. Wird das Sieb von aussen nach innen durchströmt und der Gutstoff über den über dem Sieb liegenden Strömungsraum abgeführt, so ergibt sich eine weitere Dämpfung der sich im Gutstoff ausbreitenden Pulsationen durch ein sich an der Decke des Strömungsraums bildendes Luftpolster, welches sich dort infolge von aus der Fasersuspension freigesetzter Luft bildet.

Wenn die im Siebinnern angeordneten Reinigungsflügel an einem Träger angebracht sind, welcher den axialen Siebkanal durchgreift und hülsen- oder rohrförmig ausgebildet ist, so liegen die Reinigungsflügel ebenso ausserhalb des Gutstoffablaufs, wie wenn das Sieb von innen nach aussen durchströmt wird und der Gutstoffauslass des Drucksortierergehäuses gegenüber der Siebwand in axialer Richtung versetzt ist; in beiden Fällen wird durch die genannten Massnahmen die Amplitude der im sog. Stoffauflauf auftretenden Druckschwankungen vermindert.

Weitere Merkmale, Vorteile und Einzelheiten der Erfindung ergeben sich aus den beigefügten Ansprüchen und/oder aus der nachfolgenden Beschreibung sowie der beigefügten zeichnerischen Darstellung zweier bevorzugter Ausführungsformen des erfindungsgemässen Drucksortierers, die sich mit wenigen Änderungen aus ein und derselben Grundform des erfindungsgemässen Drucksortierers herstellen lassen; in der Zeichnung zeigen:

Figur 1 einen axialen Schnitt durch die erste Ausführungsform mit von aussen nach innen durchströmtem Sieb;
Figur 1A einen Schnitt nach der Linien A-A in Figur 1;
Figur 1B einen Schnitt nach der Linie B-B in Figur 1;
Figur 2 einen axialen Schnitt durch die zweite Ausführungsform;
Figur 2A einen Schnitt durch diese zweite Ausführungsform entsprechend der Linie A-A aus Figur 2, und
Figur 3 einen Schnitt durch einen Ausschnitt der Siebwand des erfindungsgemässen Drucksortierers.

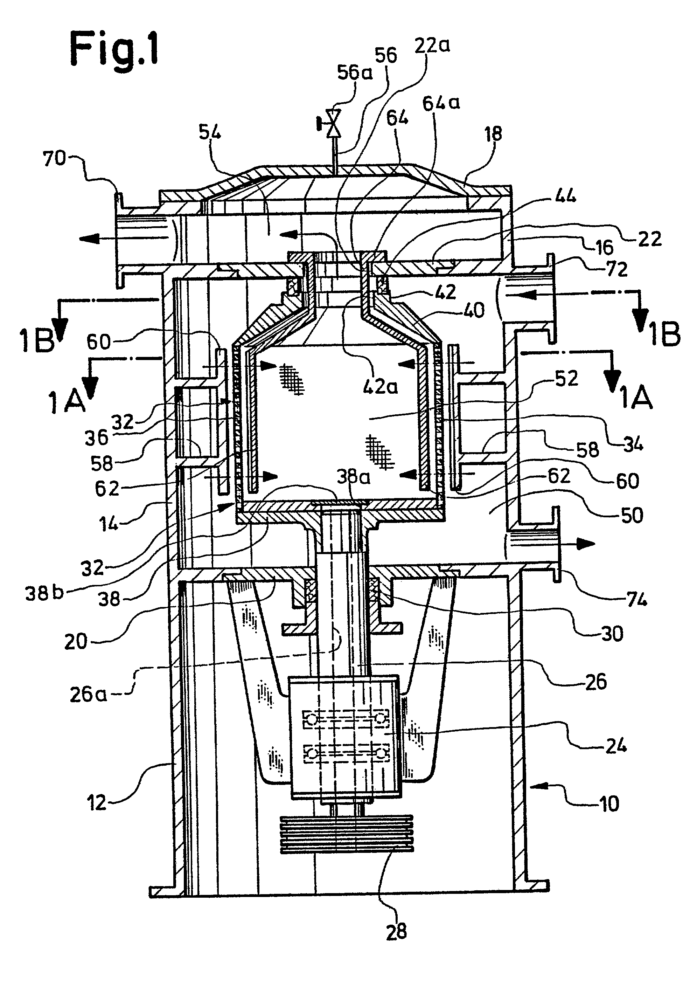

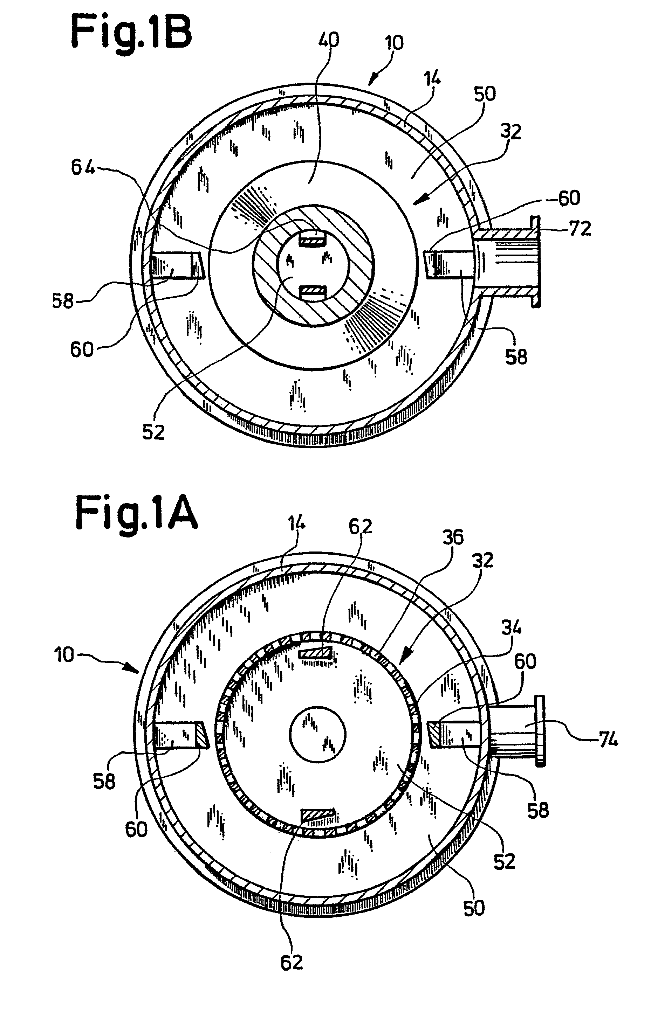

Die Figur 1 zeigt ein Drucksortierergehäuse 10 mit einem unteren Gehäuseteil 12, einem mittleren Gehäuseteil 14, einem oberen Gehäuseteil 16, welches oben durch einen Deckel 18 verschlossen ist, einer unteren Zwischenwand 20 und einer oberen Zwischenwand 22. An der unteren Zwischenwand 20 ist eine Lagerung 24 für eine Antriebswelle 26 befestigt, welch letztere unten eine ihrem Antrieb dienende Riemenscheibe 28 trägt und mit Hilfe einer Stopfbuchse 30 abgedichtet durch die untere Zwischenwand 20 hindurchgeführt ist. Diese Antriebswelle 26 trägt ein als Ganzes mit 32 bezeichnetes Sieb, welches eine kreiszylindrische, mit Sieböffnungen 36 versehene Siebwand 34 besitzt, die einen Siebkorb bildet, der unten durch ein Bodenstück 38 verschlossen ist und oben ein nicht-perforiertes Halsstück 40 trägt, das unten kegelstumpfförmig ausgebildet und oben in einen kreiszylindrischen Hals 42 ausläuft, zwischen dem und der oberen Zwischenwand 22 sich eine Gleitringdichtung 44 befindet. Wie später noch zu erörtern sein wird, ist die Antriebswelle 26 hohl, d.h. sie ist mit einem axialen Kanal versehen, für den das Bodenstück 38 des Siebs 32 eine zentrale Öffnung 38a besitzt, die bei der in Figur 1 dargestellten Ausführungsform erfindungsgemäss durch einen Deckel 38b verschlossen ist.

Das Sieb 32 unterteilt den vom mittleren Gehäuseteil 14 umschlossenen Raum in einen das Sieb 32 umfassenden, je nach Durchlaufrichtung ersten bzw. zweiten äusseren Ringraum 50 und einen im Siebinnern liegenden, je nach Durchlaufrichtung zweiten bzw. ersten Innenraum 52, welcher über einen axialen Kanal 42a des Halses 42 und eine zentrale Öffnung 22a der oberen Zwischenwand 22 mit einem Strömungsraum 54 zwischen oberer Zwischenwand 22 und Deckel 18 in Verbindung steht. Dieser Strömungsraum lässt sich über eine ein Ventil 56a enthaltende Entlüftungsleitung 56 entlüften.

Am mittleren Gehäuseteil 14 ist eine Tragvorrichtung 58 für einen Satz äusserer Reinigungsflügel 60 befestigt. Derartige Reingungsflügel sowie ihr in Figur 1A gezeigtes Profil sind an sich bekannt, so daß nur darauf hingewiesen werden soll, daß sie in der von der rotierenden Siebwand 34 mitgenommenen Fasersuspension – in Umlaufrichtung gesehen – vor dem jeweiligen Reinigungsflügel einen Überdruck und hinter dem Reinigungsflügel einen Unterdruck erzeugen, welch letzterer zu einem Rückspüleffekt an den Sieböffnungen 36 führt. Innere Reinigungsflügel 62 sind an einer Trägerhülse 64 befestigt, die ähnlich wie das Halsstück 40 geformt, d.h. unten kegelstumpfförmig und oben rohrförmig ausgebildet ist, den axialen Kanal 42a des Halsstücks durchgreift und mit einem Tragflansch 64a auf der oberen Zwischenwand 22 befestigt ist.

Das Drucksortierergehäuse 10 besitzt schliesslich am oberen Gehäuseteil 16 einen oberen Anschlußstutzen 70 und am mittleren Gehäuseteil 14 oben einen mittleren Anschlußstutzen 72 sowie unten einen unteren Anschlußstutzen 74.

Der Strömungsverlauf der Fasersuspension durch den Drucksortierer in der in Figur 1 gezeigten Ausführungsform wurde in Figur 1 durch Pfeile angedeutet. Danach wird die zu sortierende Fasersuspension in den mittleren Anschlußstutzen 72 eingespeist, so daß dieser Anschlußstutzen den Gehäuseeinlass bildet. Zweckmässigerweise wird man diesen Anschlußstutzen tangential in das kreiszylindrische Drucksortierergehäuse einmünden lassen. Die zu reinigende Fasersuspension wird dann durch die Siebwand 34 aufgeteilt in den sog. Gutstoff, der die Sieböffnungen 36 von aussen nach innen passiert, und den sog. Spuckstoff, der den Drucksortierer über den unteren Anschlußstutzen 74, welcher also hier den Spuckstoffauslass bildet, verlässt. Der Gutstoff fliesst über den axialen Kanal 42a nach oben in den Strömungsraum 54 und verlässt den Drucksortierer durch den oberen Anschlußstutzen 70, der hier also den Gutstoffauslass bildet.

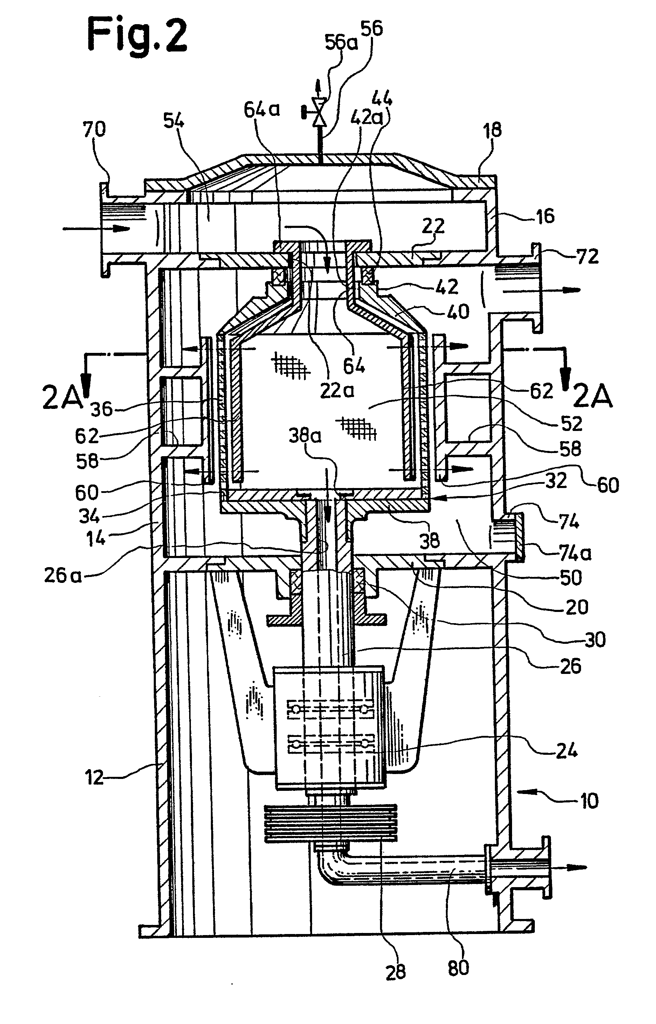

Wird der erfindungsgemässe Drucksortierer so modifiziert, wie dies die Figuren 2 und 2A zeigen, wird das Sieb von innen nach aussen durchströmt. Zu diesem Zweck wird der untere Anschlußstutzen 74 durch einen Deckel 74a verschlossen, während der in Figur 1 gezeigte Deckel 38b entfernt wird, um den bereits erwähnten zentralen axialen Kanal 26a der Antriebswelle 26 zu öffnen. Dieser mündet unten über eine geeignet ausgebildete Dichtung in ein Spuckstoffauslassrohr 80. Entsprechend der umgekehrten Durchströmung der Siebwand 34 von innen nach aussen sind bei der in den Figuren 2 und 2A gezeigten Modifikation die Reinigungsflügelprofile gerade entgegengesetzt zu denjenigen der Modifikation nach den Figuren 1, 1A und 1B orientiert.

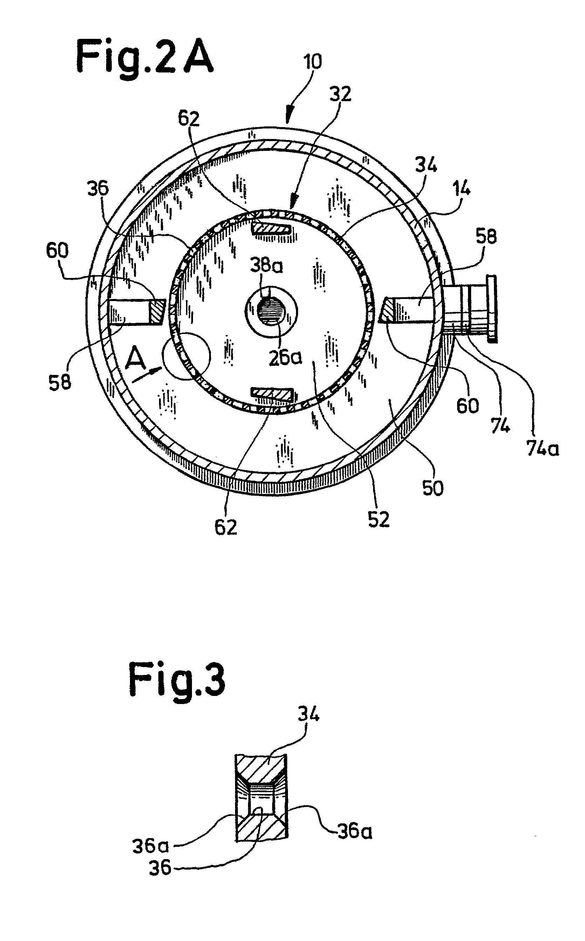

Wie die Figur 3 erkennen lässt, sind die Sieböffnungen 36 erfindungsgemäss beidseitig mit Erweiterungen 36a versehen, deren Querschnitt sich in Richtung auf die benachbarte Siebwandoberfläche insbesondere stetig erweitert. Auf diese Weise lassen sich die durch derartige Erweiterungen erreichbaren bekannten Vorteile unabhängig davon erzielen, ob das Sieb 32 nun von aussen nach innen oder von innen nach aussen durchströmt wird.

Zweckmässigerweise wählt man das Durchmesserverhältnis von Siebwand 34 und axialem Kanal 42a bzw. 26a in dem Bereich zwischen 2:1 und 5:1, und zwar für den axialen Kanal 42a insbesondere wie 3:1, für den axialen Kanal 26a insbesondere wie 4:1.

## Patentansprüche

1. Drucksortierer mit einem Gehäuse, in dem ein eine Siebwand aufweisendes Sieb (32) um eine aufrechtstehende Drehachse drehbar gelagert ist, dessen Siebwand (34) eine zur Drehachse rotationssymmetrische Gestalt aufweist und innerhalb des Gehäuses einen ersten Raum (50 bzw. 52) für eine zu sortierende Suspension von einem zweiten Raum (52 bzw. 50) für den vor der Siebwand (34) durchgelassenen Gutstoff trennt, wobei diese beiden Räume (50, 52) bezüglich der Drehachse konzentrisch zueinander angeordnet sind, sowie mit im ersten Raum (50 bzw. 52) stationär angeordneten ersten Reinigungsflügeln (60), die in geringem Abstand von der Siebwand (34) deren Kontur folgen, und mit einem Gehäuseeinlass (72; 70) für die zu sortierende Suspension, einem ersten Gehäuseauslass (70; 72) für den Gutstoff und einem zweiten Gehäuseauslass (74; 38a) für den Gutstoff und einem zweiten Gehäuseauslass für den von der Siebwand nicht durchgelassenen Spuckstoff, dadurch gekennzeichnet, daß auch im zweiten Raum (50 bzw. 52) stationäre zweite Reinigungsflügel (60 bzw. 62) angeordnet sind, die in geringem Abstand von der Siebwand (34) deren Kontur folgen, und daß das Sieb (32) an einem seiner Enden bis auf einen axialen Kanal (42a bzw. 26a), der mit einem der Gehäuseauslässe (70 bzw. 80) verbunden ist und dessen Querschnitt einen Bruchteil des Siebquerschnitts beträgt, in axialer Richtung verschlossen ist.

2. Drucksortierer nach Anspruch 1, dadurch gekennzeichnet, daß der erste Raum (50) die Siebwand (34) und den zweiten Raum (52) umgibt und der axiale Kanal (42a) des Siebs (32) mit dem Gutstoffauslass (70) verbunden ist.

3. Drucksortierer nach Anspruch 1, dadurch gekennzeichnet, daß der zweite Raum (50) die Siebwand (34) und den ersten Raum (52) umgibt und der axiale Kanal (26a) des Siebs (32) mit dem Spuckstoffauslass (80) verbunden ist.

4. Drucksortierer nach Anspruch 3, dadurch gekennzeichnet, daß der axiale Kanal (26a) in einer mit dem Sieb (32) fest verbundenen Antriebswelle (26) angeordnet ist.

5. Drucksortierer nach Anspruch 2, dadurch gekennzeichnet, daß der Gehäuseeinlass (72) sowie der Gutstoffauslass (70) am Gehäuse (10) oberhalb der Siebwand (34) angeordnet sind.

6. Drucksortierer nach Anspruch 5, dadurch gekennzeichnet, daß das Sieb (32) an seinem unteren Ende (bei 38) verschlossen ist.

7. Drucksortierer nach einem oder mehreren der vorstehenden Ansprüche, dadurch gekennzeichnet, daß an einem Ende der Siebwand (34) ein Halsstück (40) befestigt ist, welches in einen zylindrischen Hals (42) mit einem axialen Kanal (42a) ausläuft, und daß zwischen dem freien Ende des Halses und einer Gehäusezwischenwand (22), welche eine dem Halskanal (42a) benachbarte Durchlassöffnung (22a) aufweist, eine Dichtung (44) vorgesehen ist.

8. Drucksortierer nach Anspruch 7, dadurch gekennzeichnet, daß die im Siebinnern angeordneten Reinigungsflügel (62) an einem Träger (64) angebracht sind, welcher den Halskanal (42a) durchgreift.

9. Drucksortierer nach Anspruch 7 oder 8, dadurch gekennzeichnet, daß das Halsstück (40) zwischen zylindrischem Hals (42) und Siebwand (34) konisch ausgebildet ist.

10. Drucksortierer nach einem oder mehreren der vorstehenden Ansprüche, dadurch gekennzeichnet, daß das Verhältnis von Durchmesser der Siebwand (34) zu Durchmesser des axialen Kanals (42a bzw. 26a) zwischen 2:1 und 5:1 liegt.

11. Drucksortierer nach Anspruch 10, dadurch gekennzeichnet, daß das Durchmesserverhältnis ungefähr 3:1 beträgt.

12. Drucksortierer nach Anspruch 10, dadurch gekennzeichnet, daß das Durchmesserverhältnis ungefähr 4:1 beträgt.

13. Drucksortierer nach einem oder mehreren der vorstehenden Ansprüche, dadurch gekennzeichnet, daß die Siebwand (34) Sieböffnungen (36) besitzt, an deren Einström- und Ausströmende sich der Sieböffnungsquerschnitt jeweils in Richtung auf die Siebwandoberfläche erweitert.

14. Drucksortierer nach einem oder mehreren der vorstehenden Ansprüche, dadurch gekennzeichnet, daß das Gehäuse (10), in Richtung der Drehachse des Siebs aufeinanderfolgend, eine Lagerung (24) für die mit dem Sieb (32) verbundene Antriebswelle (26), eine von letzterer durchsetzte erste Zwischenwand (20), einen Aufnahmeraum (50, 52) für das Sieb (32), eine zweite Zwischenwand (22) und einen Strömungsraum (54) aufweist, daß das Gehäuse (10) im Siebaufnahmeraum (50, 52) mit einer Tragvorrichtung (58) für die auf der Aussenseite der Siebwand (34) angeordneten Reinigungsflügel (60) versehen ist, daß die zweite Zwischenwand (22) eine zur Drehachse konzentrische und mit dem Siebinnern in Verbindung stehende Durchlassöffnung (22a) aufweist und daß im Bereich des Siebaufnahmeraums und des Strömungsraums am Gehäuse Anschlussöffnungen (74, 72, 70) vorgesehen sind.

15. Drucksortierer nach den Ansprüchen 4 und 14, dadurch gekennzeichnet, daß das Gehäuse (10) im Bereich des Siebaufnahmeraums (50, 52) zwei den beiden Zwischenwänden (20, 22) benachbarte Anschlussöffnungen (74, 72) aufweist, von denen die eine (74) verschliessbar ist.

16. Drucksortierer nach den Ansprüchen 4 und 14, dadurch gekennzeichnet, daß die Lagerung (24) unterhalb des Siebaufnahmeraums (50, 52) angeordnet ist und das Gehäuse (10) unterhalb der ersten Zwischenwand (20) mit dem mit dem axialen Kanal (26a) der Antriebswelle (26) verbundenen Spuckstoffauslass (80) versehen ist.

**Claims**

1. Pressure separator with a housing, in which a screen (32) comprising a screen wall is mounted to rotate about a vertical axis of rotation, whereof the screen wall (34) has a shape which is rotationally symmetrical with respect to the axis of rotation and within the housing separates a first chamber (50 or 52) for a suspension to be separated from a second chamber (52 or 50) for the accepts let through by the screen wall (34), these two chambers (50, 52) being arranged concentrically to each other with respect to the axis of rotation, and with first cleaning blades (60) arranged in a stationary manner in the first chamber (50 or 52), which follow the contour of the screen wall (34) at a short distance therefrom, and with a housing inlet (72; 70) for the suspension to be separated, a first housing outlet (70; 72) for the accepts and a second housing outlet (74; 38a) for the rejects not let through by the screen wall, characterised in that stationary second cleaning blades (60 or 62) are also located in the second chamber (50 or 52), which follow the contour of the screen wall (34) at a short distance therefrom and that the screen (32) is closed in the axial direction at one end apart from an axial channel (42a or 26a), which is connected to one of the housing outlets (70 or 80) and whereof the cross-section amounts to a fraction of the cross-section of the screen.

2. Pressure separator according to Claim 1, characterised in that the first chamber (50) surrounds the screen wall (34) and the second chamber (52) and the axial channel (42a) of the screen (32) is connected to the accepts outlet (70).

3. Pressure separator according to Claim 1, characterised in that the second chamber (50) surrounds the screen wall (34) and the first chamber (52) and the axial channel (26a) of the screen (32) is connected to the rejects outlet (80).

4. Pressure separator according to Claim 3, characterised in that the axial channel (26a) is located in a drive shaft (26) securely connected to the screen (32).

5. Pressure separator according to Claim 2, characterised in that the housing inlet (72) and the accepts outlet (70) are located on the housing (10) above the screen wall (34).

6. Pressure separator according to Claim 5, characterised in that the screen (32) is closed at its lower end (at 38).

7. Pressure separator according to one or more of the preceding Claims, characterised in that attached to one end of the screen wall (34) is a neck portion (40), which runs into a cylindrical neck (42) with an axial channel (42a) and that provided between the free end of the neck and an intermediate wall (22) of the housing, which comprises a passage (22a) adjacent to the neck channel (42a) is a gasket (44).

8. Pressure separator according to Claim 7, characterised in that the cleaning blades (62) located inside the screen are provided on a support (64), which penetrates the neck channel (42a).

9. Pressure separator according to Claim 7 or 8, characterised in that the neck portion (40) is constructed conically between the cylindrical neck (42) and screen wall (34).

10. Pressure separator according to one or more of the preceding Claims, characterised in that the ratio of the diameter of the screen wall (34) to the diameter of the axial channel (42a or 26a) is between 2:1 and 5:1.

11. Pressure separator according to Claim 10, characterised in that the ratio of diameters amounts to approximately 3:1.

12. Pressure separator according to Claim 10, characterised in that the ratio of diameters amounts to approximately 4:1.

13. Pressure separator according to one or more of the preceding Claims, characterised in that the screen wall (34) comprises screen openings (36), at the inlet and outlet ends of which the screen opening cross-section enlarges in each case in the direction of the screen wall surface.

14. Pressure separator according to one or more of the preceding Claims, characterised in that the housing (10) comprises in succession in the direction of the axis of rotation of the screen, a bearing (24) for the drive shaft (26) connected to the screen (32), a first intermediate wall (20) penetrated by the latter, a receiving chamber (50, 52) for the screen (32), a second intermediate wall (22) and a flow chamber (54), that in the screen-receiving chamber (50, 52) the housing (10) is provided with a support device (58) for the cleaning blades (60) located on the outer side of the screen wall (34), that the second intermediate wall (22) comprises a passage (22a) concentric with the axis of rotation and connected to the inside of the screen and that connecting openings (74, 72, 70) are provided on the housing in the region of the screen-receiving chamber and of the flow chamber.

15. Pressure separator according to Claims 4 and 14, characterised in that in the region of the screen-receiving chamber (50, 52), the housing (10) comprises two connecting openings (74, 72) adjacent to the two intermediate walls (20, 22), of which one opening (74) can be closed off.

16. Pressure separator according to Claims 4 and 14, characterised in that the bearing (24) is located below the screen-receiving chamber (50, 52) and below the first intermediate wall (20) the housing (10) is provided with the rejects outlet (80) connected to the axial channel (26a) of the drive shaft (26).

## Revendications

1. Filtre-presse comportant un carter dans lequel peut tourillonner, autour d'un axe de rotation vertical, un tamis (32) qui présente une paroi de filtration et dont la paroi de filtration (34) possède une structure à symétrie de rotation par rapport à l'axe de rotation et sépare, à l'intérieur du carter, une première chambre (50 ou 52), prévue pour une suspension à filtrer, d'avec une seconde chambre (52 ou 50) prévue pour le filtrat que la paroi de filtration (34) a laissé passer, étant précisé que ces deux chambres (50, 52) sont disposées coaxialement l'une à l'autre par rapport à l'axe de rotation, et comportant également des premières ailettes de nettoyage (60) qui sont disposées, fixes, dans la première chambre (50 ou 52) et qui suivent le contour de la paroi de filtration (64) à faible distance de cette paroi, et comportant également une entrée de carter (72; 70) pour la suspension à filtrer, une première sortie de carter (70; 72) pour le filtrat et une seconde sortie de carter (74; 38a) pour le résidu que la paroi de filtration n'a pas laissé passer, caractérisé en ce que dans la seconde chambre (50 ou 52) sont également disposées des secondes ailettes de nettoyage (60 ou 62), fixes, qui suivent le contour de la paroi de filtration (34) à faible distance de cette paroi; et en ce que le tamis (32) est obturé, en direction axiale, à l'une de ses extrémités, à l'exception d'un canal axial (42a ou 26a) qui est relié à l'une des sorties (70 ou 80) du carter et dont la section représente une fraction de la section du tamis.

2. Filtre-presse selon la revendication 1, caractérisé en ce que la première chambre (50) entoure la paroi de filtration (34) et la seconde chambre (52); et en ce que le canal axial (42a) du tamis (32) est relié avec la sortie du filtrat (70).

3. Filtre-presse selon la revendication 1, caractérisé en ce que la seconde chambre (50) entoure la paroi de filtration (34) et la première chambre (52); et en ce que le canal axial (26a) du tamis (32) est relié avec la sortie (80) du résidu.

4. Filtre-presse selon la revendication 3, caractérisé en ce que le canal axial (26a) est disposé dans un arbre d'entraînement (26) solidarisé avec le tamis (32).

5. Filtre-presse selon la revendication 2, caractérisé en ce que l'entrée (72) du carter ainsi que la sortie (70) du filtrat sont disposées sur le carter (10) au-dessus de la paroi de filtration (34).

6. Filtre-presse selon la revendication 5, caractérisé en ce que le tamis (32) est obturé à son extrémité inférieure (en 38).

7. Filtre-presse selon une ou plusieurs des revendications précédentes, caractérisé en ce qu'à une extrémité de la paroi de filtration (34) est fixée une pièce de col (40) qui se termine en un col cylindrique (42) avec un canal axial (42a); et en ce qu'entre l'extrémité libre du col et une paroi intermédiaire (22) du carter, qui présente une ouverture de passage (22a) voisine du canal du col (42a), est prévue une garniture d'étanchéité (44).

8. Filtre-presse selon la revendication 7, caractérisé en ce que les ailettes de nettoyage (42) disposées à l'intérieur du tamis sont rapportées sur un support (64) qui traverse le canal du col (42a).

9. Filtre-presse selon la revendication 7 ou 8, caractérisé en ce que la pièce de col (40) a une forme conique entre le col cylindrique (42) et la paroi de filtration (34).

10. Filtre-presse selon l'une ou plusieurs des revendications précédentes, caractérisé en ce que le rapport entre le diamètre de la paroi de filtration (34) et le diamètre du canal axial (42a ou 26a) est choisi entre 2:1 et 5:1.

11. Filtre-presse selon la revendication 10, caractérisé en ce que le rapport du diamètre est d'environ 3:1.

12. Filtre-presse selon la revendication 10, caractérisé en ce que le rapport du diamètre est d'environ 4:1.

13. Filtre-presse selon une ou plusieurs des revendications précédentes, caractérisé en ce que la paroi de filtration (34) possède des ouvertures (36) sur lesquelles le côté entré du flux de la section d'ouverture va en s'élargissant respectivement dans la direction de la surface de la paroi de filtration.

14. Filtre-presse selon une ou plusieurs des revendications précédentes, caractérisé en ce que le carter (10) présente successivement, selon la direction de l'axe de rotation du tamis, un palier (24) pour l'arbre d'entraînement (26) relié au tamis (32), une première paroi intermédiaire (20) traversée par cet arbre d'entraînement, une chambre de réception (50, 52) pour le tamis (32), une seconde paroi intermédiaire (22) et une chambre d'écoulement (54); en ce que le carter (10) comporte, dans la chambre de réception (50, 52) du tamis, un dispositif support (58) pour les ailettes de nettoyage (60) disposées du côté extérieur de la paroi de filtration (34); en ce que la seconde chambre intermédiaire (22) présente une ouverture de passage (22a) coaxialement à l'axe de rotation et reliée à l'intérieur du tamis; et en ce qu'il est prévu sur le carter des ouvertures de raccordement (74, 72, 70) dans la zone de la chambre de réception du tamis et de la chambre d'écoulement.

15. Filtre-presse selon la revendication 4 et 14, caractérisé en ce que le carter (10) présente, dans la zone de la chambre (50, 52) de réception du tamis deux ouvertures de raccordement (74, 72) voisines des deux parois intermédiaires (20, 22) et dont l'une (74) peut être obturée.

16. Filtre-presse selon les revendications 4 à 14, caractérisé en ce que le palier (24) est disposé à l'intérieur de la chambre (50, 52) de réception du tamis; et en ce que le carter (10) comporte, en-dessous de la première paroi intermédiaire (20), une sortie du résidu (80) reliée au canal axial (26a) de l'arbre d'entraînement (26).

# Fig.1

# Fig.1B

# Fig.1A

# Fig.2

# Fig.2A

# Fig.3